# EUROPÄISCHE PATENTANMELDUNG

(11) **EP 0 523 269 A1**
(43) Veröffentlichungstag der Anmeldung: **20.01.1993**
(21) Anmeldenummer: 91112007.9
(22) Anmeldetag: 18.07.1991
(51) Int. Cl.: G06F 15/40

(54) **Computersystem zur Datenverwaltung**

(71) Anmelder: International Business Machines Corporation, Armonk, N.Y. 10504 (US)
(72) Erfinder: Brosda, Volkert, Dr., W-6906 Leimen 2 (DE); Obermeit, Volker, W-6100 Darmstadt (DE)
(74) Vertreter: Schäfer, Wolfgang, Dipl.-Ing.

(57) **Zusammenfassung**

Die Erfindung betrifft ein Computersystem zur Datenverwaltung, bei dem eine Anzahl von Datenfeldern in einem Speicher abgespeichert sind. Die Datenfelder sind jeweils in einzelne Datenteile aufgeteilt. Zu jedem Datenteil sind im Speicher zugehörige Struktur- und Ordnungsinformationen abgespeichert. Mit Hilfe der Strukturinformationen ist es möglich, die Art eines Datenteils zu beschreiben. Ebenfalls kann mit Hilfe der Strukturinformationen der Pfad von dem Ort des Datenteils innerhalb eines zugehörigen Strukturbaumes zur Wurzel des Strukturbaums festgelegt werden. Die Ordnungsinformationen dienen dazu, die Reihenfolge der Datenteile innerhalb eines Datenfelds zu bestimmen. Durch die Abspeicherung insbesondere der Strukturinformationen ist es möglich, diese Strukturinformationen im Zusammenhang mit Abfragen heranzuziehen. Desweiteren ist es möglich, die Strukturinformationen zur Indexierung zu verwenden. Ein Abfragevorgang kann dadurch wesentlich beschleunigt werden.

## Beschreibung

Die Erfindung betrifft ein Computersystem zur Datenverwaltung mit Speichermitteln, in denen wenigstens ein Datenfeld abgespeichert ist.

Bei derartigen Datenbanksystemen sind sämtliche Daten in tabellarischen Datenfeldern abgespeichert. So ist beispielsweise in jeder Zeile einer Kundentabelle eine fortlaufende Kundennummer, der Name, die Adresse, usw. des Kunden abgelegt. Eine zweite Tabelle enthält sämtliche bereits ausgeführten Lieferungen an Kunden. In jeder Zeile dieser Tabelle ist die Kundennummer des angelieferten Kunden abgelegt, sowie das Datum der Lieferung, der Name des gelieferten Artikels, die gelieferte Menge usw. In dem beschriebenen Beispiel sind die beiden Tabellen über die Kundennummer miteinander verknüpft. Die Anfrage, welche Lieferungen ein Kunde x an einem bestimmten Tag y erhalten hat, wird von der Datenbank dadurch gelöst und beantwortet, daß zuerst in der Kundentabelle die dem Kunden x zugeordnete Kundennummer ermittelt wird, und daß dann in der zweiten Tabelle sämtliche Lieferungen herausgesucht werden, die unter der ermittelten Kundennummer abgelegt sind, und die als weitere Bedingung den bestimmten Tag y aufweisen. Neue Kunden können jederzeit nachträglich in der Kundentabelle ergänzt werden. Ebenso können ausgeführte Lieferungen laufend in der zweiten Tabelle ergänzt werden.

Die Struktur der Datenbank kann jedoch nachträglich kaum mehr geändert werden, ohne darauf aufbauende Anwendungen ebenfalls zu überarbeiten. Dies bedeutet, daß bei der Erstellung der Tabellen alle möglichen Anforderungen, insbesondere auch mögliche zukünftige Anforderungen an die Datenbank erfüllt werden müssen. Soll beispielsweise bei der beschriebenen Kundentabelle zusätzlich die Möglichkeit geschaffen werden, daß für jeden Kunden auch noch eine BTX Nummer abgelegt werden kann, so muß eine neue Tabelle erstellt werden, in der jeder Kundennummer eine BTX Nummer zugeordnet ist. Die dazu erforderliche Wiederholung sämtlicher Kundennummern stellt insbesondere bei umfangreichen Datenbanken eine kaum zu akzeptierende Speicherplatzverschwendung dar. Soll dieser Speicherplatz nicht verschwendet werden, so muß der Kundentabelle eine weitere Spalte mit den BTX Nummern hinzugefügt werden. Dies hat jedoch eine Änderung eines Großteils der abgespeicherten Daten und Anwendungsprogramme zur Folge und ist deshalb mit einem erheblichen Aufwand verbunden.

Aufgabe der Erfindung ist es, ein Computersystem zur Datenverwaltung zu schaffen, das Strukturänderungen in einfacher Weise ermöglicht.

Die Aufgabe wird bei einem Computersystem zur Datenverwaltung der eingangs genannten Art erfindungsgemäß dadurch gelöst, daß das Datenfeld in Datenteile aufgeteilt ist, und daß zu jedem Datenteil Strukturinformationen abgespeichert sind.

Die Struktur des Datenbanksystems ist in Form der Strukturinformationen abgespeichert. Diese Strukturinformationen bilden je Datenfeld einen Strukturbaum. Die Menge aller zulässigen Strukturbäume wird durch eine Grammatik festgelegt. Zur Änderung der Struktur innerhalb der zulässigen Strukturbäume genügt es, die Strukturinformationen zu ändern. Die Struktur der Datenbank muß nicht mehr starr bei der Erstellung festgelegt werden, sondern kann flexibel nachträglich durch einfache Änderungen der Strukturinformationen verändert werden. Durch Änderung der zugrundeliegenden Grammatik ist es des weiteren möglich, die Menge der zulässigen Strukturbäume zu verändern.

Mit Hilfe der Erfindung ist es möglich, vielfältige Strukturen zu verwalten bei gleichzeitiger Unterstützung von Such- und Änderungsoperationen. Ebenso können alle bekannten Funktionen insbesondere von relationalen Datenbanksystemen, wie z.B. Recovery-Mechanismen, Mehrbenutzerfähigkeit oder Transaktionsverwaltung, benutzt werden.

Bei Ausgestaltungen der Erfindung ist als erste mögliche Strukturinformation eine Kennzeichnung vorgesehen, die die Art des Datenteils beschreibt, als zweite mögliche Strukturinformation ist eine Kennzeichnungsfolge vorgesehen, die den Pfad von der Wurzel eines Strukturbaums zu dem Datenteil beschreibt, und als dritte mögliche Strukturinformation ist eine Pfadausprägung vorgesehen, die bei gleicher Kennzeichnungsfolge, aber verschiedenen möglichen Pfaden einen bestimmten Pfad von der Wurzel des Strukturbaums zu dem Ort des Datenteils festlegt. Mit Hilfe dieser Strukturinformationen ist es möglich, sämtliche Datenteile innerhalb des Strukturbaumes eindeutig festzulegen.

Bei einer weiteren Ausgestaltung der Erfindung sind zu jedem Datenteil Ordnungsinformationen abgespeichert. Die Zuordnung der einzelnen Datenteile zueinander ist in Form dieser Ordnungsinformationen abgespeichert. Mit Hilfe der Ordnungsinformationen können die Datenteile wieder eindeutig zu Datenfeldern zusammengesetzt werden.

Bei Ausgestaltungen der Erfindung ist als erste mögliche Ordnungsinformation eine Feldangabe vorgesehen, die das Datenfeld kennzeichnet, und als zweite mögliche Ordnungsinformation ist eine Sequenzangabe vorgesehen, die die Reihenfolge der Datenteile in dem Datenfeld angibt.

Weitere Ausgestaltungen und Vorteile der Erfindung ergeben sich aus der nachfolgenden, anhand der Zeichnung vorgenommenen Beschreibung eines Ausführungsbeispiels der Erfindung.
- Fig. 1: zeigt schematisch einen Auszug aus einem Speicher, in dem Datenteile mit zugehörigen Struktur- und Ordnungsinformationen abgelegt sind.
- Fig. 2: zeigt einen ein Datenfeld bildenden Wörterbucheintrag.
- Fig. 3: zeigt die Datenteile des Datenfelds der Fig. 2 mit möglichen Strukturinformationen.
- Fig. 4: zeigt die Bedeutung der in Fig. 3 angegeben Strukturinformationen.
- Fig. 5: zeigt die Datenteile des Datenfelds der Fig. 2 mit zugehörigen Struktur- und Ordnungsinformationen.

Das nachfolgend beschriebene Ausführungsbeispiel betrifft eine Datenbank zur Verwaltung von Wörterbucheinträgen eines deutschen Wörterbuchs. Die Wörterbucheinträge bestehen nur aus Text und bilden damit einen homogenen Datentyp. Wie noch erläutert werden wird, sind die Wörterbucheinträge durch die Beschreibungssprache SGML (Standard Generalized Markup Language) dargestellt.

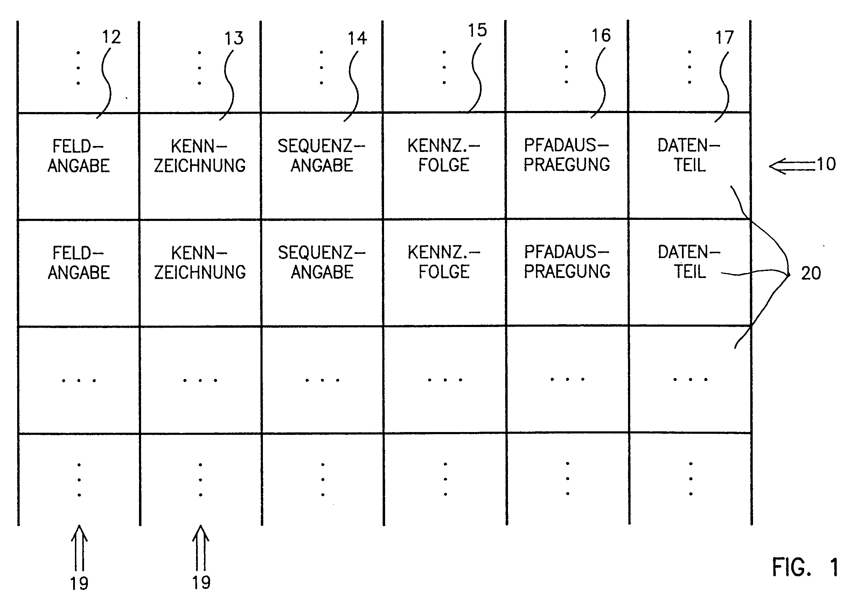

Die Datenbank enthält Speichermittel für die Abspeicherung der Wörterbucheinträge. Die Speichermittel bestehen aus einer Mehrzahl von physisch einheitlichen Speichern. Die Art und Weise, wie die Wörterbucheinträge in den Speichern abgespeichert sind, wird nachfolgend anhand der Fig. 1 erläutert.

Fig. 1 zeigt einen Auszug aus einem Speicher, der in Zeilen 10 und Spalten 19 eingeteilt ist. Jede Zeile 10 enthält eine Feldangabe 12, eine Kennzeichnung 13, eine Sequenzangabe 14, eine Kennzeichnungsfolge 15, eine Pfadausprägung 16 und einen Datenteil 17. Jede Spalte 19 enthält entweder nur Feldangaben 12, oder nur Kennzeichnungen 13, usw.. Mehrere Datenteile 17 bilden zusammen ein Datenfeld 20. Insgesamt enthält die Datenbank eine Vielzahl solcher Datenfelder 20.

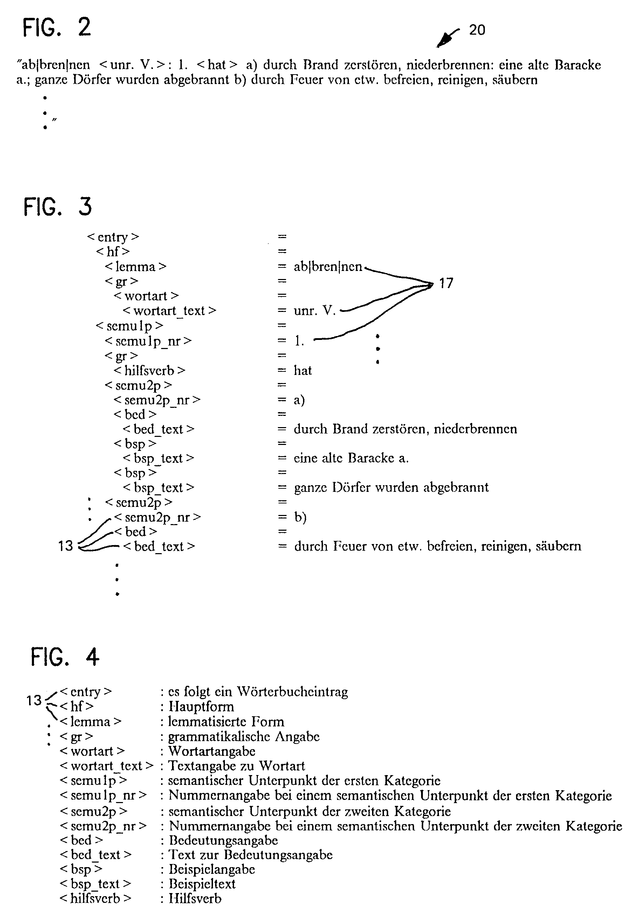

Ein einzelnes Datenfeld 20 enthält einen einzelnen Wörterbucheintrag. Die Datenteile 17 dieses Datenfelds 20 sind dabei bestimmte Textfragmente des Wörterbucheintrags. Dies wird nachfolgend anhand der Fign. 2 bis 4 näher erläutert.

Fig. 2 zeigt den Wörterbucheintrag zu dem Wort "abbrennen". Dieser Wörterbucheintrag stellt ein Datenfeld 20 dar. Wie in der Fig. 2 angedeutet ist, ist der Wörterbucheintrag nicht vollständig, sondern es sind nur die ersten 10 Textfragmente des Wörterbucheintrags dargestellt.

Fig. 3 zeigt auf der rechten Seite die einzelnen Textfragmente des Wörterbucheintrags "abbrennen". Jedes dieser Textfragmente stellt ein Datenteil 17 dar. Auf der linken Seite der Fig. 3 sind die Kennzeichnungen 13 für die Textfragmente angegeben. Diese Kennzeichnungen 13 entsprechen der bereits erwähnten Beschreibungssprache SGML. Die Kennzeichnungen 13 bilden insgesamt einen Strukturbaum, dessen Blätter die einzelnen Textfragmente sind.

Die Bedeutung der einzelnen Kennzeichnungen 13 ist in der Fig. 4 angegeben.

Aus der Fig. 4 ist beispielsweise zu entnehmen, daß die Kennzeichnung "〈wortart_text〉" die Bedeutung einer Textangabe zu einer Wortart hat. In der Fig. 3 ist unter der Kennzeichnung "〈wortart_text〉" das Textfragment "unr. V." angegeben, wobei dies die Abkürzung für "unregelmäßiges Verb" ist.

Das Textfragment "unr. V." ist ein Blatt in dem Strukturbaum, der durch die Kennzeichnungen 13 gebildet wird. Die Art des Textfragments wird durch die zugehörige Kennzeichnung 13 beschrieben. Im vorliegenden Fall wird also die Art des Textfragments "unr. V." innerhalb des Strukturbaums beschrieben durch die Kennzeichnung "〈wortart_text〉".

Der Pfad von einem Blatt des Strukturbaums zur Wurzel des Strukturbaums ist die Kennzeichnungsfolge 15. Dieser Pfad kann der Fig. 3 entnommen werden. Wie erwähnt, ist das Textfragment "unr. V" ein Blatt in dem Strukturbaum. Ausgehend von diesem Blatt ist nach der zugehörigen Kennzeichnung "〈wortart_text〉" die Kennzeichnung "〈wortart〉" die nächste versetzt angeordnete Kennzeichnung 13. Danach folgt die Kennzeichnung "〈gr〉" als widerum nächste versetzt angeordnete Kennzeichnung 13. Schließlich sind die Kennzeichnungen "〈hf〉" und "〈entry〉" die darauf folgenden jeweils versetzt angeordneten Kennzeichnungen 13. Die Kennzeichnung "〈entry〉" stellt dabei die Wurzel des Strukturbaums dar. Der Pfad von der Kennzeichnung "〈wortart_text〉" zur Wurzel "〈entry〉" des Strukturbaums weist also die Kennzeichnungsfolge "〈wortart〉 〈gr〉 〈hf〉 〈entry〉" auf. Die Kennzeichnung "〈wortart_text〉" wird nicht zur Kennzeichnungsfolge 15 hinzugezählt, da sie bereits die Kennzeichnung 13 des Textfragmentes "unr. V." bildet. Die Wurzel "〈entry〉" des Strukturbaums ist jedoch ein Teil der Kennzeichnungsfolge.

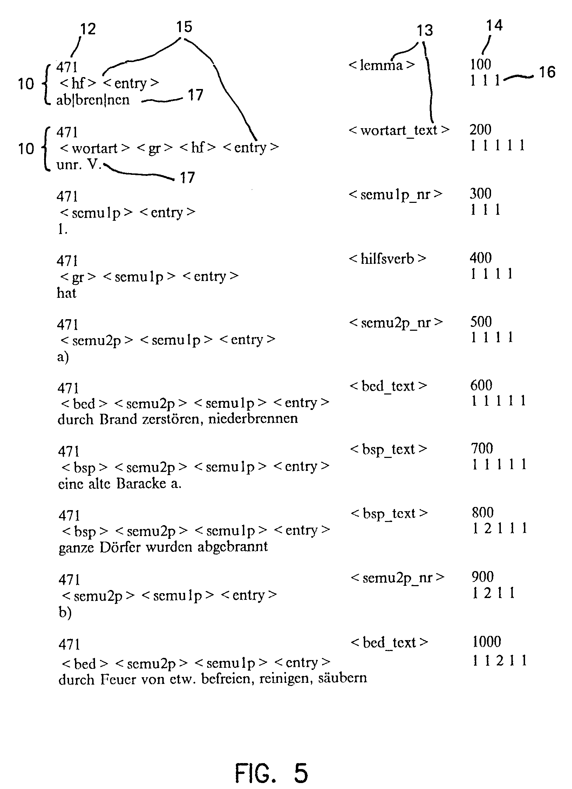

Wie bereits im Zusammenhang mit der Fig. 1 erwähnt worden ist, sind unter anderem die Kennzeichnung 13 und die Kennzeichnungsfolge 15 eines Textfragments im Speicher der Datenbank abgespeichert. Dies wird nachfolgend anhand der Fig. 5 näher erläutert.

Die Fig. 5 zeigt die im Speicher der Datenbank abgespeicherten Textfragmente des in der Fig. 2 angegebenen Wörterbucheintrags. Die einzelnen Zeilen 10 des Speichers enthalten, wie in der Fig. 1, jeweils sechs Eintragungen. Die erste Zeile 10 enthält alle Eintragungen zu dem Textfragment "abbrennen". Die zweite Zeile 10 enthält alle Eintragungen zu dem Textfragment "unr. V.", usw.

Alle Textfragmente, die zu dem Wörterbucheintrag der Fig. 2, also zu dem Wörterbucheintrag "abbrennen", gehören, weisen die gemeinsame Feldangabe 12 auf. Diese ist in der Fig. 5 die Nummer "471". Wie aus der Fig. 5 ersichtlich ist, und wie bereits im Zusammenhang mit der Fig. 1 erwähnt worden ist, ist die Feldangabe 12 in jeder Zeile 10 des Speichers angegeben.

Mit Hilfe der Feldangabe 12 werden die verschiedenen Wörterbucheinträge voneinander unterschieden.

Nach der Fig. 5, wie auch nach der Fig. 1, ist die Sequenzangabe 14 eine weitere Angabe, die in jeder Zeile 10 des Speichers enthalten ist. Jedem Textfragment ist eine Sequenzangabe 14 zugeordnet. Wie aus der Fig. 5 ersichtlich ist, sind die Sequenzangaben 14 der aufeinanderfolgenden Zeilen 10 die Zahlen "100", "200", usw..

Mit Hilfe der Sequenzangaben 14 wird die Reihenfolge der einzelnen Textfragmente innerhalb eines Wörterbucheintrags festgelegt. Die Reihenfolge der Sequenzangaben 14 in der Fig. 5 entspricht der Reihenfolge der Textfragmente des Wörterbucheintrags der Fig. 2.

Die Kennzeichnung 13 und die Kennzeichnungsfolge 15 ist im Zusammenhang mit den Fig. 3 und 4 bereits erläutert worden. In der Fig. 5 ist in der zweiten Zeile 10 des Speichers die Kennzeichnung "〈wortart_text〉" als Kennzeichnung 13 und die Kennzeichnungsfolge "〈wortart〉 〈gr〉 〈hf〉 〈entry〉" als Kennzeichnungsfolge 15 angegeben. Diese Kennzeichnung 13 bzw. Kennzeichnungsfolge 15 gehören zu dem Textfragment "unr. V.", wie dies auch in der zweiten Zeile 10 der Fig. 5 dargestellt und bereits erläutert worden ist. Es ist möglich, daß die Kennzeichnungsfolge 15 eines Wörterbucheintrags 17 den Pfad vom Blatt zur Wurzel des zugehörigen Strukturbaums nicht eindeutig festlegt. Dies soll nachfolgend an einem Beispiel gezeigt werden. Wie sich aus den Fign. 3 und 5 ergibt, kann die Kennzeichnung "〈bed_text〉" entweder dem Texfragment "durch Brand zerstören, niederbrennen" oder dem Textfragment "durch Feuer von etw. befreien, reinigen, säubern" zugeordnet sein. In beiden Fällen ist die Kennzeichnungsfolge von dem jeweiligen Textfragment zur Wurzel des Strukturbaums "〈bed〉 〈semu2p〉 〈semu1p〉 〈entry〉". Der genaue Pfad vom Blatt zur Wurzel des Strukturbaums ist somit nicht eindeutig festgelegt.

Damit der Pfad von einem Blatt zur Wurzel des Strukturbaums eindeutig festgelegt werden kann, ist zusätzlich die Pfadausprägung 16 vorgesehen. Diese Pfadausprägung 16 ist in der Fig. 5 in der Form von einzelnen Ziffern angegeben. Jeder Zeile 10 des Speichers, also jedem Textfragment ist eine Pfadausprägung 16 zugeordnet.

Dem Textfragment "durch Brand zerstören, niederbrennen" ist in der Fig. 5 die Pfadausprägung "11111" zugeordnet. Demgegenüber weist das Textfragment "durch Feuer von etw. befreien, reinigen, säubern" die Pfadausprägung "11211" auf. Die Ziffer "2" in der zweiten Pfadausprägung 16 hat die Bedeutung, daß im Strukturbaum nicht der erste Ast mit der Kennzeichnungsfolge "... 〈semu2p〉 ..." eingeschlagen werden soll, sondern daß als Pfad der zweite Ast mit dieser Kennzeichnungsfolge 15 gewählt werden soll. Mit Hilfe der Pfadausprägung 16 werden verschiedene Pfade mit gleichen Kennzeichnungsfolgen 15 voneinander unterschieden.

Schließlich ist in jeder Zeile 10 des in der Fig. 5 gezeigten Speichers noch das jeweilige Textfragment angegeben. Wie bereits erwähnt worden ist, bilden sämtliche Textfragmente zusammen einen Wörterbucheintrag.

Zusammengefaßt enthält die beschriebene Datenbank eine Vielzahl von Datenfeldern 20. Jedes Datenfeld 20 ist in eine Mehrzahl von Datenteilen 17 unterteilt. Jedem Datenteil 17 sind bestimmte Strukturinformationen und Ordnungsinformationen in der Datenbank zugeordnet. Als Ordnungsfunktionen sind die Feldangabe 12 vorgesehen, die die einzelnen Datenfelder kennzeichnet, sowie die Sequenzangabe 14, die die Reihenfolge der einzelnen Datenteile 17 innerhalb eines Datenfelds 20 festlegt. Als Strukturinformationen sind die Kennzeichnung 13, die Kennzeichnungsfolge 15 und die Pfadausprägung 16 vorgesehen. Mit Hilfe der Strukturinformationen wird die Art der Datenteile 17 beschrieben. Ebenfalls wird der Pfad von dem Ort der Datenteile 17 innerhalb eines dem Datenfeld 20 zugehörigen Strukturbaums zu der Wurzel des Strukturbaums eindeutig festgelegt.

In der beschriebenen Datenbank sind als Datenfelder 20 Wörterbucheinträge vorgesehen, die als Datenteile 17 Textfragmente aufweisen.

Eine Bearbeitung der beschriebenen Datenbank kann in der nachfolgend erläuterten Art und Weise erfolgen.

Sollen Änderungen in einer Zeile 10 des Speichers vorgenommen werden, so kann sich ein Bediener diese Zeile 10 als Teil des Datenfelds 20 anzeigen lassen und die zu ändernden Daten, z.B. das Datenteil 17 oder die Kennzeichnung 13 dieser Zeile 10 mit Hilfe eines entsprechenden Editiersystems ändern. Das Editiersystem stellt dabei die strukturelle Korrektheit auf der Basis der zulässigen Strukturbäume sicher. Die geänderte Zeile 10 kann dann wieder in den Speicher zurückgespeichert werden.

Soll eine Zeile 10 des Speichers gelöscht werden, so kann dies entsprechend der beschriebenen Art und Weise mit Hilfe des Editiersystems durchgeführt werden. Der Speicherplatz der gelöschten Zeile 10 verbleibt dann unbelegt.

Sollen Zeilen 10 im Speicher hinzugefügt werden, so kann dies dadurch erfolgen, daß der Bediener die einzufügende Zeile 10 mit Hilfe des Editiersystems editiert und dann in den Speicher abspeichert. Zu diesem Zweck wird in jedem physisch einheitlichen Speicher der Datenbank ein gewisser Speicherbereich nicht belegt. Bei Hinzufügungen kann dann die hinzuzufügende Zeile in diesem nicht belegten Speicherbereich abgespeichert werden. Dadurch ist es möglich, die hinzuzufügende Zeile in demjenigen Speicher abzuspeichern, in dem auch andere, zugehörige Zeilen bereits abgespeichert sind. Wie noch erläutert werden wird, kann auf diese Weise ein sogenannter "clustered index" geschaffen werden.

Soll die Struktur der in der Datenbank abgespeicherten Daten innerhalb der zulässigen Strukturbäume geändert werden, so kann dies dadurch erreicht werden, daß in der bereits beschriebenen Weise die Strukturinformationen der Zeilen 10 geändert werden. Entsprechend ist es möglich, durch eine Änderung der Ordnungsinformationen der Zeilen 10 die Anordnung der Daten im Speicher zu verändern.

Soll die Menge der zulässigen Strukturbäume geändert werden, so muß dies in der zugrundeliegenden Grammatik erfolgen. Diese Grammatik legt die Menge der zulässigen Strukturbäume fest und wird auch von dem genannten Editiersystem genutzt.

Eine Suche in der beschriebenen Datenbank kann mit Hilfe der Abfragesprache SQL (Standart Query Language) erfolgen, die als Standard für relationale Datenbanken gilt. Durch die Abspeicherung der jedem Datenteil 17 zugeordneten Struktur- und Ordnungsinformationen können auch diese Daten für eine Suche herangezogen werden.

Insbesondere können die Feldangabe 12, die Kennzeichnung 13, die Kennzeichnungsfolge 15 und das Datenteil 17 zur Indexierung verwendet werden. Eine Abfrage nach allen Wörterbucheinträgen bzw. Datenfeldern 20, die einen Bedeutungstext enthalten, der mit "durch Brand zerstören" beginnt, lautet dann wie folgt:

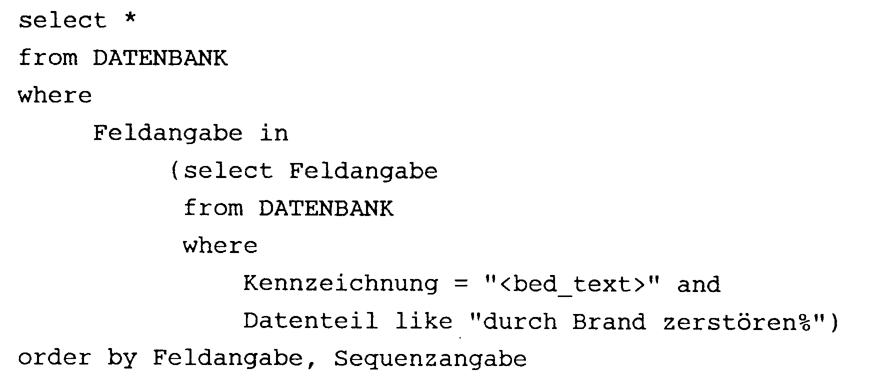

Durch die Indexierung der Kennzeichnung 13 und des Datenteils 17 können diejenigen Datenfelder 20 sehr schnell gefunden werden, deren Inhalt die Abfrage erfüllt. Diese Datenfelder 20 werden dann entsprechend der Reihenfolge ihrer Feldangabe 12 geordnet. Innerhalb eines jeden Datenfelds 20 werden die einzelnen Datenteile 17 entsprechend der Reihenfolge ihrer Sequenzangabe 14 angeordnet.

Die Feldangabe 12 kann als sogenannter "clustered index" verwendet werden. Dies bedeutet, daß sämtliche Zeilen 10 mit gleicher Feldangabe 12 innerhalb eines physisch einheitlichen Speichers abgespeichert werden. Damit kann erreicht werden, daß ein unter einer bestimmten Feldangabe 12 abgespeichertes Datenfeld 20 sich nur auf einem einzigen physisch einheitlichen Speicher befindet und somit schnell dem Bediener zur Verfügung steht. Mit Hilfe des sogenannten "clustered index" wird also vermieden, daß ein auszugebendes Datenfeld 20 von mehreren, physisch unterschiedlichen Speichern abgerufen werden muß.

## Patentansprüche

1. Computersystem zur Datenverwaltung
mit Speichermitteln,
in denen wenigstens ein Datenfeld (20) abgespeichert ist,
dadurch gekennzeichnet,
daß das Datenfeld (20) in Datenteile (17) aufgeteilt ist,
und daß zu jedem Datenteil (17) Strukturinformationen (13, 15, 16) abgespeichert sind.

2. Computersystem nach Anspruch 1,
dadurch gekennzeichnet,
daß als Strukturinformation eine Kennzeichnung (13) vorgesehen ist, die die Art des Datenteils (17) beschreibt.

3. Computersystem nach Anspruch 1 oder 2,
dadurch gekennzeichnet,
daß als Strukturinformation eine Kennzeichnungsfolge (15) vorgesehen ist, die den Pfad von der Wurzel eines Strukturbaums (Fig. 3) zu dem Datenteil (17) beschreibt.

4. Computersystem nach Anspruch 3,
dadurch gekennzeichnet,
daß als Strukturinformation eine Pfadausprägung (16) vorgesehen ist, die bei gleicher Kennzeichnungsfolge (15), aber verschiedenen möglichen Pfaden einen bestimmten Pfad von der Wurzel des Strukturbaums (Fig. 3) zu dem Ort des Datenteils (17) festlegt.

5. Computersystem nach einem der Ansprüche 1 bis 4,
dadurch gekennzeichnet,
daß zu jedem Datenteil (17) Ordnungsinformationen (12, 14) abgespeichert sind.

6. Computersystem nach Anspruch 5,
dadurch gekennzeichnet,
daß als Ordnungsinformation eine Feldangabe (12) vorgesehen ist, die das Datenfeld (20) kennzeichnet.

7. Computersystem nach Anspruch 5 oder 6,
dadurch gekennzeichnet,
daß als Ordnungsinformation eine Sequenzangabe (14) vorgesehen ist, die die Reihenfolge der Datenteile (17) in dem Datenfeld (20) angibt.

8. Computersystem nach einem der Ansprüche 1 bis 7,
dadurch gekennzeichnet,
daß das Datenfeld (20) in einem physisch einheitlichen Speicher der Speichermittel abgespeichert ist.

9. Computersystem nach einem der Ansprüche 1 bis 8,
dadurch gekennzeichnet,
daß als Datenfelder (20) Wörterbucheinträge vorgesehen sind.
